# EUROPÄISCHE PATENTSCHRIFT

(11) **EP 3 218 210 B1**
(45) Veröffentlichungstag und Bekanntmachung des Hinweises auf die Patenterteilung: **29.04.2020**
(21) Anmeldenummer: 15744935.6
(22) Anmeldetag: 03.08.2015
(51) Int. Cl.: B60C 9/00, B60C 9/20, B60C 9/22, B60C 9/18

(54) **FAHRZEUGLUFTREIFEN**
PNEUMATIC VEHICLE TIRES
PNEUMATIQUE DE VÉHICULE

(30) Priorität: 11.11.2014 DE 102014222921
(43) Veröffentlichungstag der Anmeldung: 20.09.2017
(73) Patentinhaber: Continental Reifen Deutschland GmbH, 30165 Hannover (DE)
(72) Erfinder: DE RIVA-PEREZ, Julian, 30451 Hannover (DE)
(74) Vertreter: Finger, Karsten
(86) Internationale Anmeldenummer: PCT/EP2015/067789
(87) Internationale Veröffentlichungsnummer: WO 2016/074812

(56) Entgegenhaltungen:
- EP-A1- 1 431 076
- US-B1- 6 425 426

## Beschreibung

Die Erfindung betrifft einen Fahrzeugluftreifen in Radialbauart mit zumindest einer Karkasslage, einem profilierten Laufstreifen, einem zweilagigen Gürtel und einer diesen überdeckenden Gürtelbandage mit in Umfangsrichtung des Reifens verlaufenden Bandagenkorden, welche aus zumindest einem Garn aus einem textilen Material bestehen.

Ein Fahrzeugluftreifen ist beispielsweise aus der US 6 425 426 B1 bekannt. Die Gürtelbandage ist einlagig ausgeführt, ihre in Umfangsrichtung des Reifens verlaufenden Bandagenkorde bestehen zumindest aus einem Nylongarn und einem Aramidgarn.

Aus der EP 1 431 076 A1 ist ein weiterer Fahrzeugluftreifen mit einem Laufstreifen, einem zweilagigen Gürtel und einer Gürtelbandage bekannt, welche einlagig ausgeführt ist und als Bandagenkord einen Hybridkord aus miteinander verdrillten Aramid- und Nylongarnen enthält. Dieser Fahrzeugluftreifen soll gute Fahreigenschaften bei hohen Geschwindigkeiten aufweisen.

Es ist bekannt und üblich, den Gürtel von Fahrzeugluftreifen mit einer ein- oder zweilagigen Gürtelbandage zu bedecken, die durch Spulen einer oder mehrerer Kautschukmischungsstreifen, in welche die Bandagenkorde eingebettet sind, hergestellt wird. Bandagenkorde bestehen üblicherweise aus wärmeschrumpffähigen textilen Materialien, beispielsweise aus Nylon, welches sich beim Vulkanisieren des Reifens etwas verkürzt und somit den Gürtel fest bandagiert. Gürtelbandagen tragen zu einer Verringerung des Rollwiderstandes bei einem höheren Komfort und einer guten Hochgeschwindigkeitseignung bei. Als Bandagenkord wird beispielsweise Nylon 6.6 in der Konstruktion 940×2 (zwei miteinander verdrehte Nylongarne mit 940 dtex) oder es wird ein Bandagenkord aus einem in sich verdrehten Nylongarn, insbesondere ebenfalls mit 940 dtex, verwendet. Die die Gürtelkanten überdeckende und überlappende Gürtelbandage kommt bei den meisten Reifenaufbauten axial außerhalb der breiteren, radial inneren Gürtellage mit der Karkasslage in Kontakt. Das oben erwähnte feste Bandagieren des Gürtels durch die Gürtelbandage kann bei der Verwendung von aus einem Einfachgarn gebildeten Bandagenkorden dazu führen, dass die Bandagenkorde die Korde in der Karkasslage durchschneiden bzw. durchtrennen. Bei der Verwendung eines Bandagenkordes aus zwei Garnen wie den beschriebenen besteht die Gefahr eines Durchtrennens der Karkasskorde nicht. Bandagenlagen mit solchen "Zweifachkorden" erhöhen einerseits jedoch das Gewicht des Reifens und den Rollwiderstand beim Abrollen des Reifens und sind andererseits relativ teuer im Vergleich zu Einfachkorden.

Der Erfindung liegt die Aufgabe zugrunde, einen Fahrzeugluftreifen der eingangs genannten Art derart auszuführen, dass ein Durchtrennen der Karkasskorde durch den Bandagenkord seitlich des Gürtels vermieden wird, wobei die Gürtelbandage kostengünstig und mit möglichst geringem Gewicht ausgeführt werden soll.

Gelöst wird die gestellte Aufgabe erfindungsgemäß dadurch, dass die Gürtelbandage einen zentralen Bandagenteil und zwei seitliche Bandagenteile aufweist, wobei der zentrale Bandagenteil seitlich bis über die Kanten der radial äußeren Gürtellage reicht und die beiden seitlichen Bandagenteile an den zentralen Bandagenteil anschließen, jeweils den verbleibenden Randabschnitt der radial inneren Gürtellage bedecken und axial außerhalb der Kanten der radial inneren Gürtellage in Kontakt mit einem 3,0 mm bis 20,0 mm breiten Abschnitt der Karkasslage verlaufen, wobei der Bandagenkord im zentralen Bandagenteil aus einem Einfachgarn und der Bandagenkord in den seitlichen Bandagenteilen aus zwei miteinander verdrehten Garnen besteht.

Gemäß der Erfindung ist daher ein aus zwei Garnen bestehender Bandagenkord lediglich in jenen Bereichen bzw. Abschnitten der Gürtelbandage, nämlich den seitlichen Bereichen, vorhanden, dort, wo die Gefahr eines Durchtrennens der Karkasskorde besteht. Die Verwendung eines Bandagenkordes aus zwei Garnen vermeidet ein Durchtrennen der Karkasskorde. Im zentralen, weitgehend den größten Teil der Gürtelbandage einnehmenden Bandagenteil wird ein Bandagenkord verwendet, welcher nicht nur wesentlich kostengünstiger ist als der Bandagenkord in den seitlichen Bandagenteilen, sondern auch für das Gewicht des Reifens und damit für den Rollwiderstand vorteilhaft ist.

Bei erfindungsgemäß ausgeführten Fahrzeugluftreifen können die Abschnitte der Karkasslage, die von den seitlichen Bandagenteilen bedeckt sind, eine Breite von bis zu 15 mm aufweisen.

Bei einer bevorzugten Ausführungsform der Erfindung besteht das Garn bzw. bestehen die Garne des Bandagenkordes aus einem Polyamid, insbesondere aus Nylon 6.6. Das Garn bzw. die Garne kann bzw. können bei einer alternativen Ausführungsform auch aus Polyester bestehen. Dabei ist es möglich, dass der Bandagenkord im zentralen Bandagenteil aus einem anderen Material besteht als der Bandagenkord in den seitlichen Bandagenteilen. Bei den erwähnten Materialien handelt es sich um solche, die leicht verfügbar und kostengünstig sind.

Je nach Konstruktion des Reifens bzw. je nach vorgesehenem Einsatzzweck werden Bandagenkorde verwendet, deren Garne eine bestimmte Feinheit aufweisen. Bevorzugt wird der Bandagenkord des zentralen Bandagenteils und der seitlichen Bandagenteile aus einem Polyamidgarn hergestellt, welches eine Feinheit von 700 dtex bis 1800 dtex, insbesondere von 940 dtex bis 1400 dtex, aufweist. Bei einer besonders bevorzugten Ausführungsform ist der Bandagenkord im zentralen Bandagenteil ein Polyamidkord 940×1, der Bandagenkord in den seitlichen Bandagenteilen ein Polyamidkord 940×2.

Je nach Einsatzzweck werden die Bandagenteile ein- oder mehrlagig ausgeführt. So wird insbesondere der zentrale Bandagenteil ein- oder zweilagig ausgeführt, die seitlichen Bandagenteile werden ein- bis dreilagig ausgeführt.

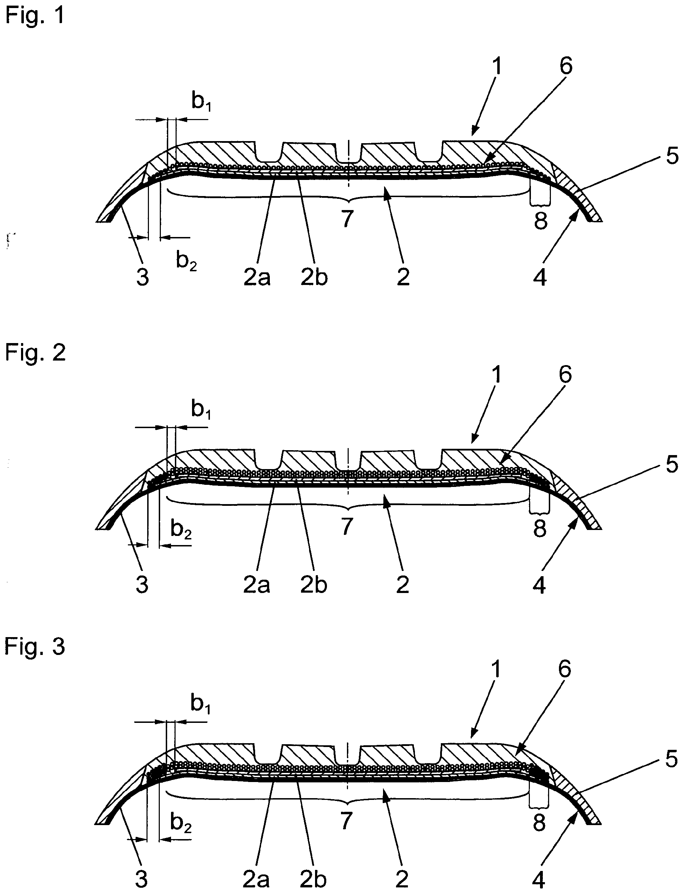

Weitere Merkmale, Vorteile und Einzelheiten der Erfindung werden nun anhand der schematischen Zeichnung, die Ausführungsbeispiele der Erfindung darstellt, näher beschrieben. Dabei zeigen
Fig. 1 bis Fig. 3 jeweils einen Querschnitt durch einen Fahrzeugluftreifen im Bereich des Laufstreifens mit einer Ausführungsvariante der Erfindung.

Erfindungsgemäß ausgeführte Fahrzeugluftreifen sind Reifen in Radialbauart für Personenkraftwagen oder Vans. Bei den in den Figuren 1 bis 3 gezeigten Ausführungsvarianten weist der Fahrzeugluftreifen einen profilierten Laufstreifen 1, einen Gürtel 2, eine insbesondere einlagige Radialkarkasse 3, eine Innenschicht 4, Seitenwände 5, von welchen die radial äußeren Endabschnitte gezeigt sind, sowie eine Gürtelbandage 6 auf. Nicht dargestellt sind die Wulstbereiche mit zugfesten Wulstkernen und Kemprofilen. Wie an sich bekannt, ist die Radialkarkasse 3 in den Wulstbereichen durch Umschlingen der zugfesten Wulstkerne verankert.

Der Gürtel 2 weist zwei Gürtellagen 2a, 2b auf, wobei die radial innere Gürtellage 2a breiter ist als die radial äußere Gürtellage 2b. Die Gürtellagen 2a, 2b bestehen in an sich bekannter Weise aus in eine Gummierungsmischung eingebetteten Festigkeitsträgern, insbesondere aus Stahlkord, die in jeder Lage 2a, 2b parallel zueinander und unter einem spitzen Winkel von insbesondere 24° bis zu 28° zur Umfangsrichtung verlaufen, wobei die Festigkeitsträger in der einen Gürtellage 2a die Festigkeitsträger in der anderen Gürtellage 2b kreuzen. Der dargestellte Reifen ist ferner derart aufgebaut, dass die Seitenwände 5 seitlich des Laufstreifens 1 enden. Bei einer anderen, nicht dargestellten Variante reichen die Seitenwände bis zu den Gürtelkanten bzw. enden kurz vor diesen.

Die Gürtelbandage 6 besteht aus einem zentralen Bandagenteil 7 und zwei seitlichen Bandagenteilen 8. Der zentrale Bandagenteil 7 ist in einer Breite ausgeführt bzw. erstellt, welche geringfügig größer ist als die Breite der radial äußeren Gürtellage 2b, sodass der zentrale Bandagenteil 7 zwar die seitlichen Kanten der Gürtellage 2b überdeckt, aber nicht mehr die seitlichen Kanten der Gürtellage 2a. Die Breite b₁ des überdeckenden Abschnittes beträgt insbesondere 2 mm bis 5 mm. Die beiden seitlichen Bandagenteile 8 schließen unmittelbar an den zentralen Bandagenteil 7 an und überdecken die seitlichen Kanten der radial inneren Gürtellage 2a. Axial außerhalb der Gürtellage 2a befinden sich die beiden seitlichen Bandagenteile 8 in Kontakt mit der Karkasslage 3. Die Breite b₂ des die Gürtelkanten der Gürtellage 2a überlappenden Abschnittes der seitlichen Bandagenteile 8 beträgt in der Größenordnung von 3 mm bis 20 mm. Sowohl der zentrale Bandagenteil 7 als auch die seitlichen Bandagenteile 8 sind als Spulbandage hergestellt. Eine Spulbandage wird üblicherweise aus zumindest einem Streifen aus in eine unvulkanisierte Kautschukmischung eingebettetem Bandagenkord, der in Streifenlängsrichtung und im fertigen Reifen somit in oder nahezu in Umfangsrichtung verläuft, spiralig auf den Gürtel 2 gewickelt. Die Wicklung kann derart erfolgen, dass die einzelnen Windungen des jeweiligen Streifens Stoß an Stoß liegen oder zum Teil überlappen. Des Weiteren ist eine Lückenspulung denkbar, bei der zwischen den Windungen ein kleiner Abstand verbleibt. Die zur Herstellung von Spulbandagen verwendeten Kautschukmischungsstreifen weisen üblicherweise eine Breite von 8 mm bis 12 mm auf, der gegenseitige Abstand der Festigkeitsträger innerhalb der Kautschukmischungsstreifen beträgt mindestens 0,2 mm, üblicherweise wird der gegenseitige Abstand derart gewählt, dass die Fadendichte in der Gürtelbandage 80 epdm (ends per decimeter) bis 125 epdm beträgt.

Der Bandagenkord im zentralen Bandagenteil 7 ist ein "Einfachkord", welcher aus einem in sich verdrehten Garn besteht, und zwar vorzugsweise aus einem Polyamid oder aus Polyester. Das Polyamid des Bandagenkordes ist insbesondere Nylon 6.6, das Polyester kann aus der Gruppe bestehend aus Polyethylenterephthalat, Polyethylennaphthalat, Polybutylenterephthalat oder Polycarbonat ausgewählt sein. Das zur Herstellung des Einfachkordes verwendete Polyamid weist eine Feinheit von 700 dtex bis 1800 dtex, insbesondere von 940 dtex bis 1400 dtex auf, von den am Markt derzeit erhältlichen Garnen aus Polyamid 6.6 kommt daher beispielsweise ein Garn mit 940 dtex oder 1400 dtex in Frage. Von den Polyestergarnen werden insbesondere solche verwendet, deren Feinheit 1440 dtex beträgt.

Die seitlichen Bandagenteile 7 werden aus einem Kautschukmischungsstreifen gespult, welcher als Bandagenkord einen "Zweifachkord" enthält. Der Bandagenkord besteht aus zwei gleichen Garnen, die miteinander verdreht bzw. vertwistet sind, welche entweder aus einem Polyamid oder einem Polyester bestehen, wie für den Einfachkord beschrieben. Der "Zweifachkord" ist beispielsweise ein Kord aus Nylon mit der Konstruktion 940×2 oder 1400×2. Der Bandagenkord im zentralen Bandagenteil 7 kann aus einem anderen Material bestehen als die Garne des Bandagenkordes in den beiden seitlichen Bandagenteilen 8.

Die Figuren 1 bis 3 zeigen unterschiedliche Ausführungsvarianten von Gürtelbandagen 6, die nach dem erfindungsgemäßen Konzept einen zentralen Bandagenteil 7 und seitliche Bandagenteile 8 aufweisen. Bei der in Fig. 1 gezeigten Ausführungsform sind im zentralen Bandagenteil 7 und in den beiden seitlichen Bandagenteilen 8 die jeweiligen Bandagenkorde einlagig vorhanden. Wie erwähnt werden dabei die Bandagenteile 7, 8 als Spulbandage aus Kautschukmischungsstreifen, welche die entsprechenden Korde enthalten, erstellt. Das in Fig. 1 gezeigte Spulbild wird als 1-1-1 bezeichnet. Bei der in Fig. 2 gezeigten Ausführungsvariante weist der zentrale Bandagenteil 7 zwei Bandagenlagen, also zwei Lagen von Bandagenkorden, auf, die aus einer Spulbandage durch Wickeln von zwei Lagen erstellt wird. Die beiden seitlichen Bandagenteile 8 bestehen ebenfalls aus zwei übereinander gespulten Lagen, daher aus zwei Lagen von Bandagenkorden, das Spulbild lautet daher 2-2-2. Fig. 3 zeigt eine Ausführungsvariante, bei der im zentralen Bandagenteil 7 zwei Bandagenlagen erstellt worden sind und in den seitlichen Bandagenteilen 8 jeweils drei Bandagenlagen vorgesehen sind, das zugehörige Spulbild lautet daher 3-2-3.

Die Erfindung ist auf die dargestellten Ausführungsbeispiele nicht eingeschränkt, der zentrale Bandagenteil und die seitlichen Bandagenteile können auch mit anderen Spulbildern als dargestellt erstellt werden.

### Bezugsziffernliste

- 1 .....................: Laufstreifen
- 2 .....................: Gürtel
- 2a, 2b .............: Gürtellage
- 3 .....................: Karkasslage
- 4 .....................: Innenschicht
- 5 .....................: Seitenwand
- 6 .....................: Gürtelbandage
- 7 .....................: Bandagenteil
- 8 .....................: Bandagenteil
- b₁, b₂ ..............: Breite

## Patentansprüche

1. Fahrzeugluftreifen in Radialbauart mit zumindest einer Karkasslage (3), einem profilierten Laufstreifen (1), einem zweilagigen Gürtel (2) und einer diesen überdeckenden Gürtelbandage (6) mit in Umfangsrichtung des Reifens verlaufenden Bandagenkorden, welche aus zumindest einem Garn aus einem textilen Material bestehen,
**dadurch gekennzeichnet,**
**dass** die Gürtelbandage (6) einen zentralen Bandagenteil (7) und zwei seitliche Bandagenteile (8) aufweist, wobei der zentrale Bandagenteil (7) seitlich bis über die Kanten der radial äußeren Gürtellage (2b) reicht und die beiden seitlichen Bandagenteile (8) an den zentralen Bandagenteil (7) anschließen, jeweils den verbleibenden Randabschnitt der radial inneren Gürtellage (2a) bedecken und axial außerhalb der Kanten der radial inneren Gürtellage (2a) in Kontakt mit einem 3,0 mm bis 20,0 mm breiten Abschnitt der Karkasslage (3) verlaufen, wobei der Bandagenkord im zentralen Bandagenteil (7) aus einem Einfachgarn und der Bandagenkord in den seitlichen Bandagenteilen (8) aus zwei miteinander verdrehten Garnen besteht.

2. Fahrzeugluftreifen nach Anspruch 1, **dadurch gekennzeichnet, dass** die Abschnitte der Karkasslage (3), die von den seitlichen Bandagenteilen (8) bedeckt sind, eine Breite (b₂) von bis zu 15,0 mm aufweisen.

3. Fahrzeugluftreifen nach Anspruch 1 oder 2, **dadurch gekennzeichnet, dass** das Garn bzw. die Garne der Bandagenkorde aus einem Polyamid, insbesondere aus Nylon 6.6, bestehen.

4. Fahrzeugluftreifen nach Anspruch 1 oder 2, **dadurch gekennzeichnet, dass** das Garn bzw. die Garne der Bandagenkorde aus Polyester bestehen.

5. Fahrzeugluftreifen nach Anspruch 4, **dadurch gekennzeichnet, dass** das Polyester aus der Gruppe bestehend aus Polyethylenterephthalat, Polyethylennaphthalat, Polybutylenterephthalat oder Polycarbonat ausgewählt ist.

6. Fahrzeugluftreifen nach einem der Ansprüche 1 bis 3, **dadurch gekennzeichnet, dass** das Polyamidgarn des Bandagenkordes im zentralen Bandagenteil (7) eine Feinheit von 700 dtex bis 1800 dtex, insbesondere von 940 dtex bis 1400 dtex, aufweist.

7. Fahrzeugluftreifen nach einem der Ansprüche 1 bis 3, **dadurch gekennzeichnet, dass** die Polyamidgarne des Bandagenkordes in den seitlichen Bandagenteilen (8) eine Feinheit von 700 dtex bis 1800 dtex, insbesondere von 940 dtex bis 1400 dtex, aufweisen.

8. Fahrzeugluftreifen nach einem der Ansprüche 1 bis 7, **dadurch gekennzeichnet, dass** der Bandagenkord im zentralen Bandagenteil (7) ein Polyamidkord 940×1 ist.

9. Fahrzeugluftreifen nach einem der Ansprüche 1 bis 7, **dadurch gekennzeichnet, dass** der Bandagenkord in den seitlichen Bandagenteilen ein Polyamidkord 940×2 ist.

10. Fahrzeugluftreifen nach einem der Ansprüche 1 bis 9, **dadurch gekennzeichnet, dass** der zentrale Bandagenteil (7) ein- oder zweilagig ausgeführt ist.

11. Fahrzeugluftreifen nach einem der Ansprüche 1 bis 10, **dadurch gekennzeichnet, dass** die seitlichen Bandagenteile (8) ein- bis dreilagig ausgeführt sind.

## Claims

1. Pneumatic vehicle tyre of a radial type with at least one carcass ply (3), a profiled tread strip (1), a two-ply belt (2) and a belt bandage (6) which covers the former with bandage cords which run in the circumferential direction of the tyre and consists of at least one yarn made from a textile material,
**characterized**
**in that** the belt bandage (6) has a central bandage part (7) and two lateral bandage parts (8), the central bandage part (7) reaching laterally as far as over the edges of the radially outer belt ply (2b), and the two lateral bandage parts (8) adjoining the central bandage part (7), in each case covering the remaining edge section of the radially inner belt ply (2a), and running axially outside the edges of the radially inner belt ply (2a) in contact with a section of the carcass ply (3) of from 3.0 mm to 20.0 mm in width, the bandage cord in the central bandage part (7) consisting of a single yarn, and the bandage cord in the lateral bandage parts (8) consisting of two yarns which are twisted with one another.

2. Pneumatic vehicle tyre according to Claim 1, **characterized in that** the sections of the carcass ply (3) which are covered by the lateral bandage parts (8) have a width (b₂) of up to 15.0 mm.

3. Pneumatic vehicle tyre according to Claim 1 or 2, **characterized in that** the yarn or the yarns of the bandage cords consists/consist of a polyamide, in particular of nylon 6.6.

4. Pneumatic vehicle tyre according to Claim 1 or 2, **characterized in that** the yarn or the yarns of the bandage cords consists/consist of polyester.

5. Pneumatic vehicle tyre according to Claim 4, **characterized in that** the polyester is selected from the group consisting of polyethylene terephthalate, polyethylene naphthalate, polybutylene terephthalate or polycarbonate.

6. Pneumatic vehicle tyre according to one of Claims 1 to 3, **characterized in that** the polyamide yarn of the bandage cord in the central bandage part (7) has a fineness of from 700 dtex to 1800 dtex, in particular of from 940 dtex to 1400 dtex.

7. Pneumatic vehicle tyre according to one of Claims 1 to 3, **characterized in that** the polyamide yarns of the bandage cord in the lateral bandage parts (8) have a fineness of from 700 dtex to 1800 dtex, in particular of from 940 dtex to 1400 dtex.

8. Pneumatic vehicle tyre according to one of Claims 1 to 7, **characterized in that** the bandage cord in the central bandage part (7) is a polyamide cord 940x1.

9. Pneumatic vehicle tyre according to one of Claims 1 to 7, **characterized in that** the bandage cord in the lateral bandage parts is a polyamide cord 940x2.

10. Pneumatic vehicle tyre according to one of Claims 1 to 9, **characterized in that** the central bandage part (7) is of single-ply or double-ply configuration.

11. Pneumatic vehicle tyre according to one of Claims 1 to 10, **characterized in that** the lateral bandage parts (8) are configured with from one to three plies.

## Revendications

1. Pneumatique de véhicule à structure radiale comprenant au moins une couche de carcasse (3), une bande de roulement profilée (1), une nappe d'armature à deux couches (2) et un bandage de nappe d'armature (6) recouvrant cette dernière et pourvu de cordes de bandage s'étendant dans la direction circonférentielle du pneumatique et constituées d'au moins un fil en matière textile,
**caractérisé en ce que**
le bandage de nappe d'armature (6) comporte une partie de bandage centrale (7) et deux parties de bandage latérales (8), la partie de bandage centrale (7) s'étendant latéralement au-delà des bords de la couche de nappe d'armature radialement extérieure (2b) et les deux parties de bandage latérales (8) se raccordant à la partie de bandage centrale (7), couvrant la portion de bord restante de la couche de nappe d'armature radialement intérieure (2a) et s'étendant axialement à l'extérieur des bords de la couche de nappe d'armature radialement intérieure (2a) en contact avec une portion de la couche de carcasse (3) de 3,0 mm à 20,0 mm de largeur, la corde de bandage comprenant, dans la partie de bandage centrale (7), un fil simple et la corde de bandage comprenant, dans les parties de bandage latérales (8), deux fils torsadés l'un avec l'autre.

2. Pneumatique de véhicule selon la revendication 1, **caractérisé en ce que** les portions de la couche de carcasse (3), qui sont recouvertes par les parties de bandage latérales (8), ont une largeur (b₂) pouvant atteindre 15,0 mm.

3. Pneumatique de véhicule selon la revendication 1 ou 2, **caractérisé en ce que** le fil ou les fils des cordes de bandage sont en polyamide, notamment en nylon 6.6.

4. Pneumatique de véhicule automobile selon la revendication 1 ou 2, **caractérisé en ce que** le fil ou les fils des cordes de bandage sont en polyester.

5. Pneumatique de véhicule selon la revendication 4, **caractérisé en ce que** le polyester est choisi dans le groupe comprenant le téréphtalate de polyéthylène, le naphtalate de polyéthylène, le téréphtalate de polybutylène ou le polycarbonate.

6. Pneumatique de véhicule selon l'une des revendications 1 à 3, **caractérisé en ce que** le fil de polyamide de la corde de bandage de la partie de bandage centrale (7) présente une finesse de 700 dtex à 1800 dtex, notamment de 940 dtex à 1400 dtex.

7. Pneumatique de véhicule selon l'une des revendications 1 à 3, **caractérisé en ce que** les fils de polyamide de la corde de bandage des parties de bandage latérales (8) présentent une finesse de 700 dtex à 1800 dtex, notamment de 940 dtex à 1400 dtex.

8. Pneumatique de véhicule selon l'une des revendications 1 à 7, **caractérisé en ce que** la corde de bandage de la partie de bandage centrale (7) est une corde de polyamide 940x1.

9. Pneumatique de véhicule selon l'une des revendications 1 à 7, **caractérisé en ce que** la corde de bandage des parties de bandage latérales est une corde de polyamide 940x2.

10. Pneumatique de véhicule selon l'une des revendications 1 à 9, **caractérisé en ce que** la partie de bandage centrale (7) est réalisée en une ou deux couches.

11. Pneumatique de véhicule selon l'une des revendications 1 à 10, **caractérisé en ce que** les parties de bandage latérales (8) sont réalisées en une à trois couches.
